# EUROPEAN PATENT SPECIFICATION

(11) **EP 3 252 727 B1**
(45) Date of publication and mention of the grant of the patent: **16.11.2022**
(21) Application number: 17164506.2
(22) Date of filing: 03.04.2017
(51) Int. Cl.: G08B 13/24, E05B 73/00

(54) **SECURITY SYSTEM AND SECURITY TAG ASSEMBLY**
SICHERHEITSSYSTEM UND SICHERHEITSETIKETTENANORDNUNG
SYSTÈME DE SÉCURITÉ ET ENSEMBLE D'ÉTIQUETTE DE SÉCURITÉ

(30) Priority: 11.05.2016 US 201662334666 P; 10.08.2016 US 201615233020
(43) Date of publication of application: 06.12.2017
(60) Divisional application: 18167315.3
(73) Proprietor: ES Holding Dragør ApS, 2791 Dragør (DK); Braeburn Asset Holdings, LLC, Nassau (BS)
(72) Inventor: Stenild, Eddie L, 2791 Dragør (DK); Skjellerup, Johan, Boca Raton, FL 33481 (US)
(74) Representative: Modiano, Gabriella Diana

(56) References cited:
- EP-A1- 2 791 872
- EP-A2- 1 505 551
- EP-B1- 2 791 872
- WO-A2-03/088006
- US-A- 5 955 951
- US-A1- 2013 199 026
- US-A1- 2013 278 425
- US-A1- 2014 203 936

## Description

### BACKGROUND OF THE INVENTION

### Field of the Invention

This invention is directed to a security system and security tag assembly incorporating RFID technology, operative to restrict unauthorized removal of articles from an area. Article data is encoded and saved the RFID. A deactivator assembly includes a read component structured to read the encoded article data, wherein the read data is transmitted to a processor for display, storage and/or supplementary processing during or prior to removal of the security tag assembly. One or more portable readers are configured to access and display the article data for authorized personnel. A review application may be downloaded on communication devices having short range technology and is configured to access the article data to obtain information relating to article pricing, etc.

### DESCRIPTION OF THE RELATED ART

Security or anti-theft tags are extensively used in the retail merchandising industry as well as numerous other areas of commerce. In typical fashion, such devices are attached to various types of merchandise in such a manner that that they are clearly obvious by one examining the merchandise. Common knowledge of the use and operation of such devices is believed to prevent or at least restrict the theft or other unauthorized removal of merchandise from the retail outlet or other area being monitored. More specifically, it is believed that such security tag devices serve as a deterrent to unauthorized removal in that a potential thief will recognize that the merchandise will be "stained" or otherwise marked, thereby rendering the merchandise useless, upon forced removal of the security tag. Alternatively the tag may be structured to activate an alarm system as the merchandise, incorporating the tag thereon, passes through a monitoring station typically located at the exits to the retail establishment.

Due to the popularity of security or anti-theft devices of the type described above, numerous attempts have been made to design and structure a device which not only serves as a deterrent against theft, but which includes structural features intended to overcome any attempt to defeat the device which may be applied by an experienced thief. In addition, the structure of such security devices should be such as to be easily secured to and removed from different types of articles such that a device of substantially standard structure can be used to monitor and protect various types of merchandise.

As set forth above known security or anti-theft tags are intended to provide some indication which either renders the merchandise useless or alternatively signals an attempted unauthorized removal.

While popular, it is recognized that a significant number of the anti-theft tags currently being utilized include problems or disadvantages which render them less than totally efficient. More specifically, wide spread knowledge of the structural features of such security tags allows unauthorized personnel to develop techniques which are specifically designed to remove the tag from the merchandise in a manner which defeats the aforementioned indicator structures. Therefore it is not uncommon for a skilled or experienced thief to develop tools or techniques to remove the merchandise from the area being monitored without damage to the stolen article or activation of an alarm or monitoring system.

Accordingly there is a recognized need in the security industry for a security system incorporating an anti-theft device preferably in the form of a relatively small security tag assembly which efficiently connects to various types of merchandise and which is specifically structured to overcome known techniques to remove or otherwise defeat such devices. Moreover, such protective structural features should be compatible with an efficient tag construction and configuration. Therefore, a security tag manufacture or provider who can effectively "customize" a proposed indicator assembly to include various "theft indicating" devices, electronic signaling devices or a combination thereof, while not requiring a restructuring or redesign of the entire tag assembly or the remaining, basic operable components associated therewith.

Document US2014203936 A1 discloses a portable deactivator for security tag deactivation.

From document US 5 955 951 it is known a combined article surveillance and product identification system formed by conventional EAS detection equipment, hard EAS tags with RFID circuitry installed in the hard tag enclosure, a tag detaching device modified to include product data reading and transaction data writing capabilities, and a point-of-sale terminal modified to interact with the detaching device. The point-of-sale terminal triggers operation of the detaching device to separate the hard tag from an article of merchandise in response to data read from the tag by the detaching device and relayed to the point-of-sale terminal.

### SUMMARY OF THE INVENTION

The present invention is directed to a security system operative to restrict unauthorized removal of articles from an area having the features set forth in claim 1. Preferred embodiments are set out in the dependent claims. At least one, but more practically a plurality of security tag assemblies are utilized to implement the security system. Also, it will be noted that the security system and attendant security tag assembly is readily adaptable or use in a "retail environment". As such, the structural and operative features of the security system and security tag assembly may be described herein as being practiced in such a retail environment. However, it is noted that the security system and security tag assembly of the present invention in any of the preferred embodiments thereof is not limited to such a retail environment.

As practically applied and utilized, the security system of the present invention includes utilization of at least one, but more practically, a plurality of security tag assemblies. Each of the tag assemblies are removably secured to a different one of a plurality of articles within the secured area, such as the aforementioned retail store or the like. Moreover, each of the tag assemblies includes an RFID component, which as described in greater detail hereinafter, is preferably in the form of an RFID label.

Further, the RFID component is configured to have data relating to an article to which is attached, encoded or programmed therein. Such "article data" may vary but, by way of example only, may include information relating to pricing, inventory control, material, place and date of origin, warranties, treatment instructions, storage location or other information which may be of benefit to the seller, manufacture, customer, etc.

The security system of the present invention also comprises the use of at least one deactivator assembly. As utilized, the at least one deactivator assembly is used in operative association with a processor. As indicated above, in a conventional retail environment, the aforementioned processor may be or have the ability to function as a "checkout" device, cash register and/or point-of-sale (POS) facility and includes a monitor or display screen. In operative combination, the processor and a correspondingly disposed and operatively associated deactivator assembly may, in different preferred embodiments, serve to deactivate each security tag assembly attached to an article during the authorized "checkout" procedure.

As such, the deactivator assembly includes an RFID reader capable of accessing the article data contained on a given security tag assembly which relates to a specific article to which it is attached. As also explained hereinafter, various embodiments of the deactivator assembly may include storage facilities for retaining the downloaded article data being read by the deactivator assembly. Thereafter one or more additional preferred embodiments of the deactivator assembly include transmitter or generator capabilities. The data read by the deactivator assembly is "memorized" and stored for subsequent transmission to the processor. The processor, which in at least one embodiment of the present invention may be in the form of a "POS" terminal, cooperatively functions with the deactivator assembly to complete the checkout procedure at least to the extent of displaying pertinent portions of the article data such as pricing, etc. Further, the processor or POS terminal is capable of performing supplementary processing in addition to performing the checkout procedure. Such supplementary processing may relate to storage and/or transmission of certain portions of the article data for, by way of example only but not limited to, inventory control.

Additionally, the deactivator assembly includes on-off modes of operation which serve as an additional security feature to prevent the unauthorized use of the deactivator assembly and/or processor. More specifically, authorized personnel associated with the area, retail establishment, etc. carry or otherwise have immediate access to portable RFID devices, carried on their person. Such portable RFID devices could be in the form of labels, plastic tags, or other RFID operative devices capable of accomplishing the "off-mode" and "on-mode" of the deactivator assembly serving to lock and unlock its use or operability. In use, the portable RFID device carried by authorized personnel will be passed over and RFID antenna associated with the deactivator assembly serving to unlock the deactivator assembly, at least for a preset or preprogrammed time period. Accordingly, when the deactivator assembly isn't used within the preset or preprogrammed period of time it will automatically turn off or be in a locked state of operation. As a result, the next authorized individual intending to complete a checkout procedure will again have to expose or access that individual's portable RFID device to the antenna of the deactivator in order to unlock the deactivator and render it operable. Therefore, the authorized portable RFID devices are structured to place the deactivator assembly and/or processor/POS terminal in an "on-mode" for the predetermined preset period of time and subsequently upon expiration thereof the deactivator assembly will automatically be disposed in an "off-mode". In the "on-mode", the deactivator assembly and/or processor is capable of performing the checkout procedure and/or the deactivation of the RFID component associated with a given security tag assembly, in an intended manner. However, in the "off-mode", operation of the deactivator assembly is restricted to the extent that a security tag assembly cannot be "deactivated" and/or removed. This will prevent customers or any unauthorized personnel from utilizing the deactivator assembly to deactivate and/or remove a security tag assembly, facilitate its detachment from the article and/or otherwise facilitate the unauthorized removal of the article from the secured area. It is also noted that the plurality of security tag assemblies associated with the security system of the present invention may also be equipped with electronic article surveillance (EAS) of conventional design and operation, to facilitate monitoring and prevention of articles passing through monitoring stations located at exit ways of the secured area. In addition to or instead of the EAS surveillance the security tag assembly may include ink cartridges.

Additional operative and structural features associated with the security system of the present invention is the ability of authorized personnel to periodically or on a predetermined basis check the status of articles and/or article data by wirelessly monitoring any of the security tag assemblies. More specifically, authorized personnel may include portable RFID readers which may or may not be directly associated with the reading devices operative to determine the aforementioned on-off modes of the deactivator assembly. More specifically, utilizing the portable, wireless RFID readers authorized personnel may access the article data of any given security tag assembly. Such article data is read and displayed on the portable RFID reader to facilitate an update of the article data such as pricing review or changing or as a method of reviewing the accuracy of such article data.

Yet additional features of the security system of the present invention includes a review application configured to access article data encoded on the RFID component associated with the different security tag assemblies. As such, the review application is configured to be downloaded on and operative with a communication device carried by customers or other non-employees visiting the secured area. Such a communication device may be a smart phone or the like having short range communication facilities such as, but not limited to Bluetooth, NFC, etc. In use, a customer may thereby position his or her smart phone, or other device, in relatively close proximity to a given security tag. This will result in at least some of the article data being accessed and displayed on the display function of the smart phone. The customer may thereby be informed of pricing and/or other information relating to the purchase or features associated with the article intended to be purchased.

Each of the possibly large number of security tag assemblies used to implement the security system of the present invention may vary in construction, function and purpose dependent, at least in part, on the embodiment utilized. Accordingly one or more preferred embodiments of the tag assembly include a tag member including a housing, in which the RFID component is mounted. More specifically, the RFID component may include an RFID label which is secured to the inner surface of the housing in a manner which conforms the RFID label to the configuration or shape of the inner surface. An attachment structure in the form of an elongated connector pin is secured to the housing by passing there through and through interior portions of the integrated circuit, which may at least partially define the structure of the RFID label. Conformance of the RFID label to the inner surface of the housing may be accomplished by producing the IC on a sheet of flexible material.

A cover member is disposed in overlying relation to the RFID label and in covering relation to at least a portion and/or majority of the inner surface of the housing. The cover member serves to retain and accurately position the RFID label in its intended orientation within the housing. Further, structural features associated with the cover member may facilitate its securement to the interior of the housing and/or to the RFID label itself.

Each of at least one embodiment of the plurality of security tag assemblies includes a base removably attached to the tag member by virtue of removable interconnection with the aforementioned connector pin. As such, the base includes a locking mechanism which may differ in structure and operation but which serves to securely engage the connector pin so as to maintain the tag member and the base connected to one another and in retaining or capturing relation to the article to which the tag assembly is secured. Therefore, in use the tag member and the base are initially separated. Securement to a given article is accomplished by passing the connector pin through the article and into secured engagement with the locking assembly associated with the base. The structure of the base, specifically including the locking assembly may also be adapted for deactivation or release of the connector pin by operative engagement or proximity scanning of the security tag assembly relative to the aforementioned deactivator assembly.

Accordingly, variations of the security system and security tag assembly of the various embodiments of the present invention provide a unique and effective protection of an area to be secured, in terms of preventing unauthorized removal of articles from the secured area.

These and other objects, features and advantages of the present invention will become clearer when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawings in which:
Figure 1 is a perspective view in exploded form of one embodiment of a security tag assembly used in the security system of the present invention.
Figure 2 is a perspective interior view of a tag component in at least partially assembled form of the embodiment of Figure 1.
Figure 3 is a transverse interior sectional view of the embodiment of Figure 1 in assembled form.
Figure 4 is an interior perspective view of a housing of the tag component of the embodiment of Figures 1-2.
Figure 5 is a plan view of an RF ID component in the form of an RFID label as incorporated in the embodiment of Figures 1-3.
Figure 6 is an interior perspective view of the structural components of Figures 4 and 5 in at least partially assembled form.
Figure 7 is an interior perspective view of a cover member of the embodiment of the security tag assembly as represented in Figures 2-3.
Figure 8 is an interior perspective view of the structural components, as represented in Figures 4-7, of the security tag assembly of the embodiment of Figure 1.
Figure 9 is a front plan view of a deactivator assembly incorporated in at least one preferred embodiment of the security system of the present invention.
Figure 9A is a front plan view of the embodiment of Figure 9 in operative relation to a security tag assembly during a checkout procedure.
Figure 9B is a front plan view of the embodiment of Figure 9 in operative relation to a security tag assembly for purposes of deactivation and removal from an article.
Figure 9C is an interior/rear view of the deactivator assembly of the embodiment of Figures 9-9B and electronics associated with the operation thereof.
Figure 10 is a schematic representation of at least one preferred embodiment the deactivator assembly of the present invention.
Figure 11 is a schematic representation of one embodiment and/or implementation of the security system of the present invention.
Figure 12 is a schematic representation of yet another embodiment and/or implementation of the security system of the present invention.
Figure 13 is a perspective view of a portable reader assembly operative to review article data associated with each of a possible plurality of security tag assemblies.

Like reference numerals refer to like parts throughout the several views of the drawings.

### DETAILED DESCRIPTION OF THE PREFERRED EMBODIMENT

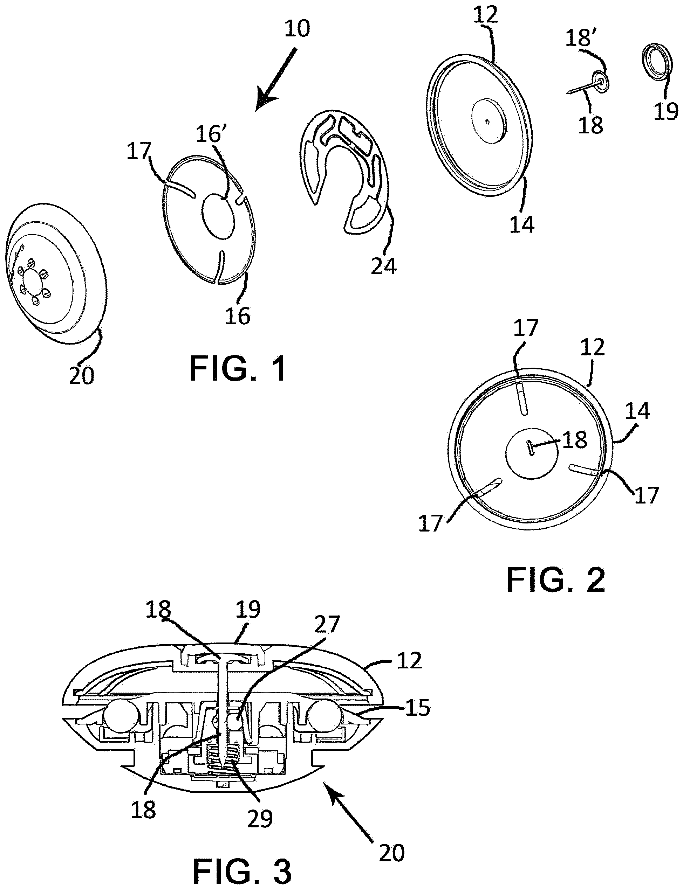

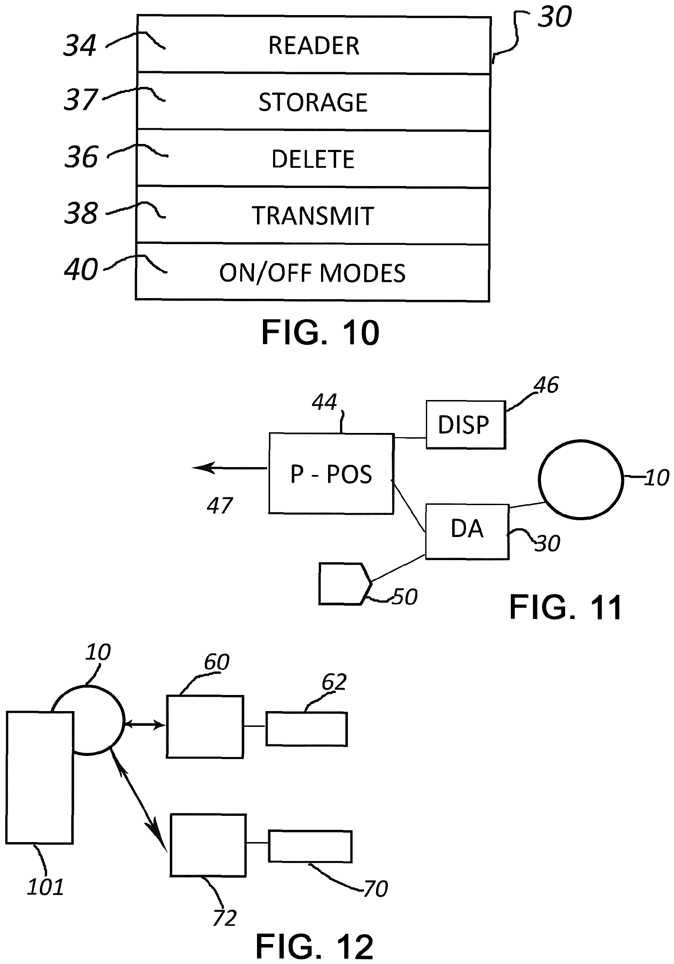

The present invention is directed to a security system, generally indicated as 100 in Figures 10-11, operative to restrict unauthorized removal of articles 101 from an area. Further, at least one, but more practically a plurality of security tag assemblies 10, represented in detail in Figures 1-8, are utilized to implement the security system 100.

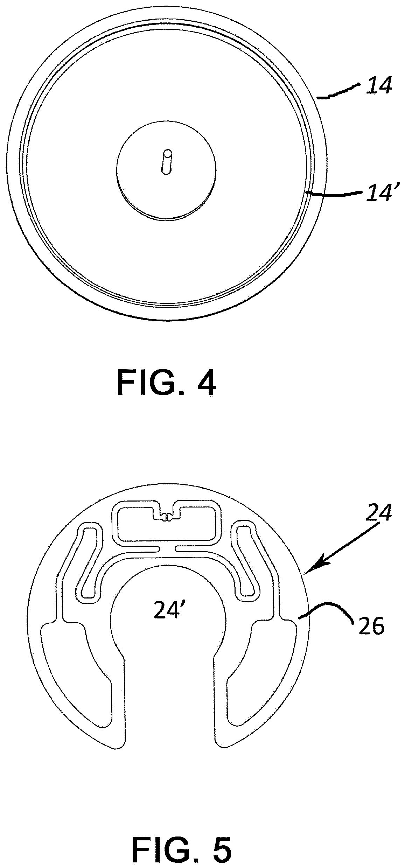

For purposes of clarity, the structural and operational features of the security tag assembly 10 will be described herein and subsequently its use in the system 100. With primary reference to Figures 1-3, the security 10 comprises a tag member 12 including a tag housing 14 and a cover member 16. Figure 2 represents the housing 14, connector pin 18 and cover member 16 in an assembled orientation, but not connected to a base 20 of the security tag assembly 10. More specifically, the tag member 12 includes an RFID component generally indicated as 24 and represented in detail and in at least partially assembled form in Figures 5-6. The RFID component 24 is preferably in the form of an RFID label which may include an integrated circuit (IC) mounted on a flexible material film or the like 26. Further, the RFID component/label 24 includes a substantially "open configuration" to facilitate its attachment to the interior surface 14' of the housing 14 in cooperation with the placement of the connecting pin 18.

When so disposed within the housing 14, the RFID component or label 24 is disposed in overlying relation to the inner surface 14' and due to the flexibility of the film 26 on which it is disposed, the RFID component/label 24 substantially conforms to at least a portion of the shape of the interior surface 14'. The connector pin 18 has a sufficiently elongated configuration to extend outwardly from the interior of the housing 14 and be connected to the locking assembly 27 associated with the base 20.

The locking assembly 27 may be structurally and operationally similar and/or equivalent to that disclosed in U.S. Patent 8590348.

As such, the locking assembly 27 may include a plurality of balls or like locking members, as described in the above noted U.S. Patent, disposed in a secured, retained orientation by biasing spring 29. Authorized release of the security tag assembly 10 can be accomplished by utilization of an externally applied detachment assembly of the type described in above referenced patent. More specifically, the external detachment assembly includes at least one or more detachment members (not shown herein) which pass through appropriately disposed and aligned apertures 20' in the base 20 and into a detaching engagement with portions of the locking assembly 27. As a result the tag member 12 and the connecting pin 18 are separable from the base 20 and the locking assembly 27.

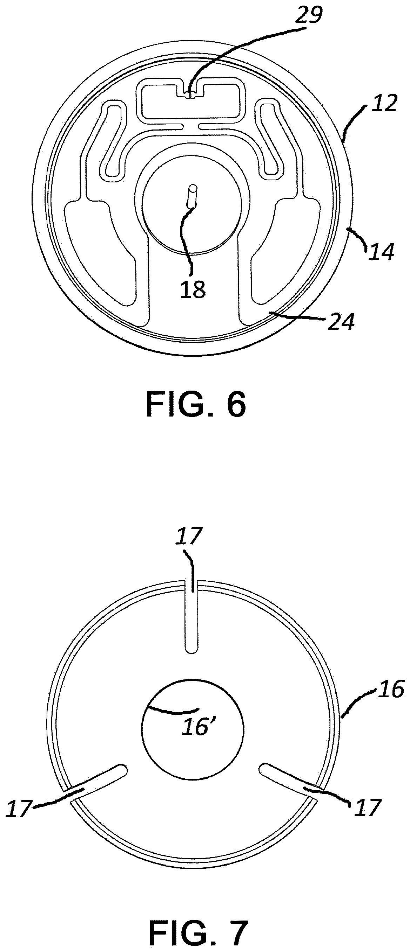

With primary reference to Figures 4-6, the pin is attached to the housing 14 by passing there through from an exterior and as represented in both Figures 1 and 3. More specifically, a protective cap or plug 19 may be disposed in covering relation to the pinhead 18' and be secured to the exterior portion of the housing 14 as clearly represented in Figure 3. The pin 18 passes through the housing 14 generally at a center portion thereof. Also, as represented in Figure 6 the pin 18 will also pass through an open portion 24' of the RFID label 24. This will allow placement of the metallic material pin 18 in sufficiently spaced relation to an antenna or other portions of the RFID label 24 to reduce electrical and/or operational interference there between.

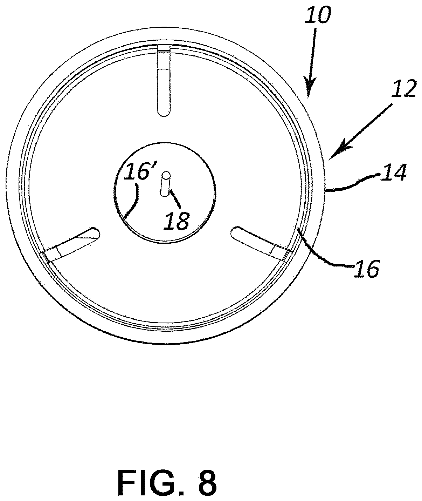

Additional features of the tag member 12 includes the aforementioned cover member 16 being disposed in overlying, covering relation to the RFID component and label 24 and in covering relation to a portion and/or majority of the inner surface 14' of the housing 14, as represented in greater detail in Figures 6-8. In addition, structural features associated with the cover member 16 include at least one but preferably a plurality of elongated channels or slots 17. The one or more slots 17 are used to provide an efficient and effective "snap-fit" or like attachment to the RFID component/label 24, as represented in Figure 6. Accordingly, when assembled, as represented in Figure 8, the cover member 16 will be disposed in overlying relation to the RFID label/component 24 and in covering and overlying relation to at least a portion of the inner surface 14' of the housing 14. Further, a central opening 16' is disposed in the cover member 16 and is in general alignment with the connecting pin 18 thereby allowing passage of the connecting pin 18 there through into secure relation with the base 20 and locking assembly 27.

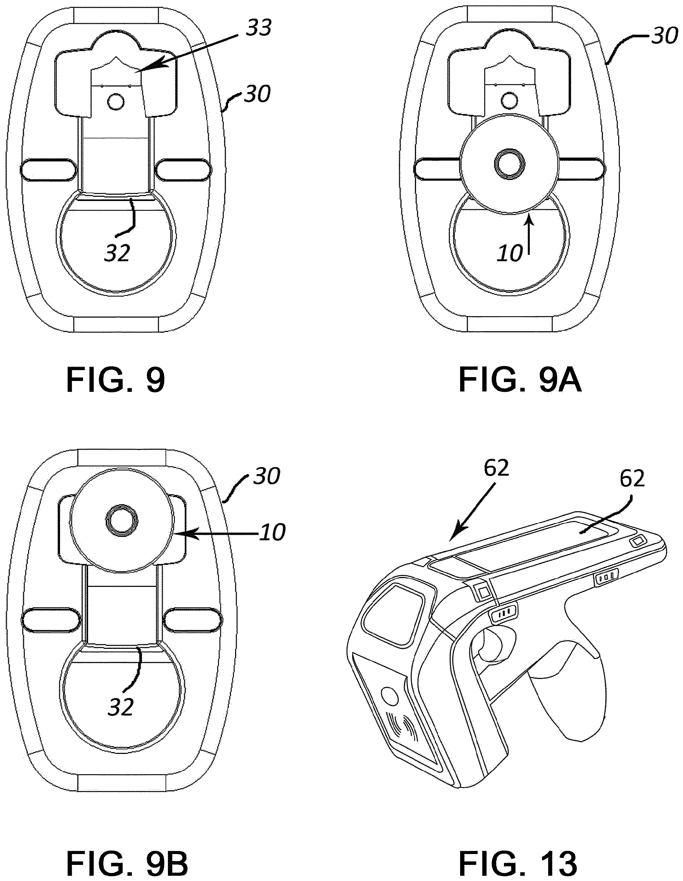

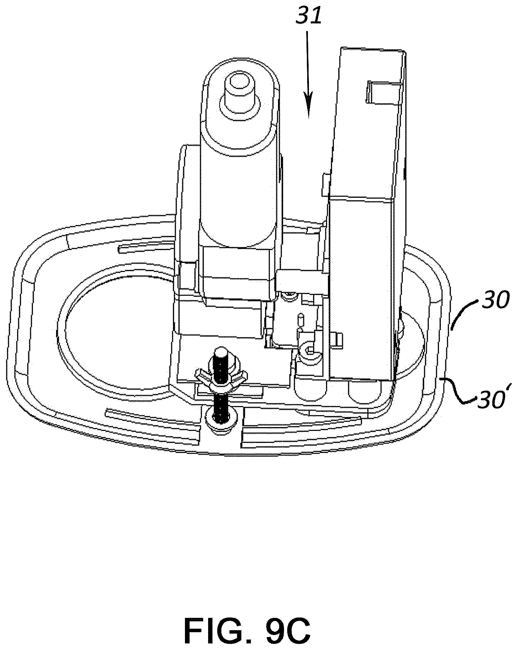

Yet additional features associated with the security tag assembly 10 may include a freely rotational connection between the housing 14 of the tag member 12 and the base 20. This will restrict the ability to "unscrew" and/or otherwise detach the housing 14 from the base 14, such as by unauthorized personnel. Also, additional strength may be added to the security tag assembly 10 by forming at least portions thereof from a zinc material in order to enhance the strength thereof while concurrently reducing the possibility of electrical and/or magnetic interference between operative portions thereof and a deactivator assembly generally indicated as 30 in Figures 9-10.

For purposes of clarity and Figures 9-9C represent the deactivator assembly 30 independently of its typically intended use with a point of sale (POS) and/or processor 44, as described in greater detail hereinafter in Figure 10. As such, the deactivator assembly 30 includes a deactivating portion 32, operative to effectively deactivate the security assembly 10, as represented in Figure 9A during a relatively close proximity scan and/or placement of the security tag assembly 10 by the deactivator assembly 30. As such, the deactivator assembly 30 includes the aforementioned deactivating portion/reader 32 as well as an assembly 33 disposed and structured to facilitate disconnection of the security assembly 10 from the article 101 to which it was originally attached. Figure 9C is a rear or "interior' side 30' of the deactivator assembly 30 including electronics generally indicated as 31, associated with the operation thereof.

As used and as represented in Figure 9A, the security tag assembly 10 is disposed in direct reading access or proximity to the reading and deactivating portion 32. After the article data has been read and the security tag assembly 10 is ready for disconnection or separation from the article 101, it is disposed into the alignment with the disconnection assembly portion 33. At this location, portions of the security tag assembly 10 are separated from one another to facilitate removal of the article 101 therefrom. Such disconnection and/or separation may be accomplished in the manner described in the above noted reference to the inventor herein.

It is further noted that once deactivated and disconnected from the article 101, the activation assembly 30 may be reprogrammed for reuse with different article data. As such the RFID label 34 remains active/powered to facilitate such reprogramming and reuse.

With primary reference to Figure 10, the deactivator assembly 30, dependent on the preferred embodiment implemented into the system 100, includes a plurality of operative features. Such operative features include a reader function 34, a delete function 36, a storage function 37 a transmit function 38 and an on-off modes function 40. The various functions 34-40 of the deactivator assembly 30 may be operable independently or collectively dependent, at least in part, upon the embodiment of the deactivator assembly 30 utilized and the intended and/or desired implementation of various aspects of the security system 100.

More specifically, and as collectively represented in Figures 10-12, the deactivator assembly 30 is operative and may be physically associated with a processor/POS terminal 44. As indicated above, the processor 44 may be, but is not limited to, a POS terminal of the type utilized in a retail environment and includes "checkout" procedures facilitating the purchase or otherwise authorized removal of an article 101 from the secured area. Further, the processor/POS terminal 44 includes a monitor or display screen 46 and also includes memory and or transmission capabilities capable of storing "article data" downloaded from each of the plurality of security tag assemblies 10. However, integration of the processor and POS terminal 44 results in processing of the "article data" directly therein and/or thereby. As set forth above, the RFID label/component 24 is configured to have data relating to an article, to which it is attached, encoded or programmed therein. Such "article data" may vary but, by way of example only, may include information relating to pricing, inventory control, material, place and date of origin, warranties, treatment instructions, storage location or other information which may be of benefit to the seller, manufacture, customer, etc.

Moreover, the memory and transmission facilities associated with the processor/POS terminal 44 may facilitate the transmission, as at 47, of memorized or retained article data received from each of the one or more security tag assemblies 10 to supplementary processing facilities such as, but not limited to, inventory control or the like. In the alternative, such "supplementary processing" may take place in the processing facilities associated with the processor/POS terminal 44. In addition, when a security tag assembly 10, attached to an article 101 is ready for checkout or authorized removal, a proximity scan thereof is accomplished by the deactivator assembly 30 as also represented in Figure 9A. Dependent upon the different operational and structural embodiments of the deactivator assembly 30 being utilized, there may be only a reading of the article data by the reader function 32, 34 of the deactivator assembly 30, from the security tag assembly 10 wherein such read data is visually available and accessed on the display 46. In such an non-claimed embodiment, the security tag assembly 10 may not necessarily be removed from the article 101 and is read and/or scanned for purposes of review of the article data for purposes of pricing, inventory, etc.

In yet another embodiment the deactivator assembly 30 utilizes additional ones of the operative features to the extent that the encoded data within the security tag assembly 10 is read, by reader function 32, 34 and is stored by reader function 37 and is substantially concurrently deleted from the security tag assembly 10 by the delete function 36. Thereafter, locking assembly 27 of the security tag assembly 10 acted upon as set forth above and as represented in Figure 9B thereby permitting a detachment of the tag member 12 from the base 20 and a removal of the security tag assembly 10 from the article 101 to which it was originally attached. Thereafter or concurrently there with the read article data from these security tag assembly 10, being stored, as at 37 may be transmitted by transmission function 38 to the memory/database of the processor/POS terminal 44 wherein such stored data is visually accessible on display 46. As set forth above, the stored and retained article data may be transmitted for additional or supplementary processing or such supplementary processing may occur utilizing the processor facilities integrated in the processor/POS terminal 44. Such supplementary processing may include, but is not limited to, inventory control, etc. As also noted herein, once read and stored by the deactivator assembly 30 and/or processor 44, the article data is deleted from the security tag assembly 10. As also set forth above, the security tag assembly 10 and more specifically the RFID label 24 remains active/powered and is thereby capable for reuse by being reprogrammed or encoded again with different article data when attached to a different article.

Additionally, the deactivator assembly 30 includes on-off modes as schematically represented by the on/off mode function 40 in Figure 10. In operation, the on-off mode of the deactivator assembly 30 serves as an additional security feature to prevent the unauthorized use of the deactivator assembly 30 and/or processor 44. More specifically, authorized personnel associated with the area, retail establishment, etc. carry and/or have access to portable RFID devices 50 as schematically represented in Figure 11.

Such portable RFID devices 50 could be in the form of labels, plastic tags, or other RFID operative devices capable of accomplishing the "off-mode" and "on-mode" of the deactivator assembly by serving to lock and unlock its use or operability. More specifically the portable RFID device 50, carried by authorized personnel, will be passed over and/or brought into a predetermined, operative proximity to an RFID antenna associated with the deactivator assembly 30. As a result, assuming that the deactivator assembly 30 has not been used for a predetermined or preset period of time, it will automatically assume it's "off-mode" by being locked. In order to proceed with a checkout procedure, authorized personnel, in the possession of or having access to the portable device 50, access the antenna of the deactivator assembly 30 with the portable device 50 as set forth above. This will unlock or place the deactivator assembly 30 in the "on-mode" at least for a preset or preprogrammed time period, as set forth above. Therefore, when the deactivator assembly is not used for the preset or preprogrammed period of time, it will automatically turn off or be disposed in a locked state of operation, in the "off-mode". As a result, the next authorized individual intending to complete a checkout procedure will again have to expose or access that individual's portable RFID device 50 to the antenna of the deactivator assembly 30 in order to unlock the deactivator assembly 30 and render it operable in the "on-mode".

Therefore, the authorized portable RFID devices 50 are structured to place the deactivator assembly and/or processor/POS terminal in an "on-mode" for the predetermined or preset period of time and subsequently upon expiration thereof the deactivator assembly 30 will automatically be disposed in an "off-mode". In the "on-mode", the deactivator assembly 30 and/or processor/POS terminal 44 is capable of performing the checkout procedure and/or the deactivation of the RFID component associated with a given security tag assembly 10, as disclosed above. However, in the "off-mode", operation of the deactivator assembly is restricted to the extent that a security tag assembly cannot be "deactivated" and removed until the deactivator assembly 30 is again placed in the "on-mode" such as through utilization by authorized personnel of the portable RFID device 50. This will prevent customers or any unauthorized personnel from utilizing the deactivator assembly to deactivate and remove a security tag assembly by its detachment from the article thereby facilitating the unauthorized removal of the article from the secured area.

In a practical application, the portable RFID devices 50 may be in the form of labels, plastic tags, or variety of other structures having RFID capabilities and which may be carried on the person of authorized personnel. In use, an authorized individual may wirelessly access the deactivator assembly 30 and/or processor to complete a checkout procedure or article data review. This will prevent customers or any unauthorized personnel from utilizing the deactivator assembly 30 to deactivate a security tag assembly and detach it from the article 101 thereby facilitating the unauthorized removal of the article from the secured area. It is also noted that the plurality of security tag assemblies 10 associated with the security system 100 of the present invention may also be equipped with electronic article surveillance (EAS) of conventional design and operation, to facilitate monitoring and prevention of articles passing through monitoring stations located at exit ways of the secured area, without removal and deactivation of the security tag assembly 10. As an alternative and or in addition to EAS surveillance the security tag assembly 10 may include ink cartridges as at 15 in Figure 3.

Additional operative and structural features associated with the security system of the present invention is the ability of authorized personnel to periodically or on a predetermined basis check the status of articles 101 and/or article data by wirelessly monitoring any of the security tag assemblies 10. More specifically, authorized personnel may include portable RFID readers 60, as represented in Figure 13 and schematically in Figure 12. It is emphasized that the RFID reader 60 are to be distinguishable from the portable RFID devices 50 carried by authorized personnel which, as set forth above are operative to determine the "on-off mode' of the deactivator assembly 30. More specifically, RFID readers 60 are preferably operative on a wireless basis and are portable. As represented in Figure 13, the RFID readers 60 may include display facilities 62 authorized personnel may access the article data of any given security tag assembly 10. Such article data is read and displayed, as at 62 on the portable RFID reader 60 to facilitate an update of the article data, such as pricing review or changing or as a method of reviewing the accuracy of such article data.

Yet additional features of the security system 100 of the present invention includes a review application configured to access article data encoded on the RFID component 24 associated with the different security tag assemblies 10. As such, the review application 70 is configured to be downloaded on and operative with a communication device 72 carried by customers or other non-employees visiting the secured area. Such a communication device 72 may be a smart phone or the like having short range communication facilities such as, but not limited to Bluetooth, NFC, etc. In use, a customer may thereby position his or her smart phone 72, or other device, in relatively close proximity to a given security tag. This will result in at least some of the article data being accessed and displayed on the display function of the smart phone 72. The customer may thereby be informed of pricing and/or other information relating to the purchase or features associated with the article intended to be purchased.

Since many modifications, variations and changes in detail can be made to the described preferred embodiment of the invention, it is intended that all matters in the foregoing description and shown in the accompanying drawings be interpreted as illustrative and not in a limiting sense. Thus, the scope of the invention is determined by the appended claims

## Claims

1. A security system (100) to restrict unauthorized removal of an article from an area, said security system comprising:
at least one security tag assembly (10) structured for attachment to the article (101), said one security tag assembly (10) including an RFID component (24) structured for encoding the article data associated with the article (101) to which it is attached,
a deactivator assembly (30) including a release component (33) and a read component (34), said read component structured to read the article data encoded in said RFID component (24), and on-off modes (40) operative to define restricted operation of said deactivator assembly (30), said restricted operation including deactivation of at least said deactivator assembly (30) when in an off--mode,
said deactivator assembly (30) and said at least one security tag assembly (10) being cooperatively structured to read, by means of said read component (34), the article data via proximity scanning of said at least one security tag assembly (10) relative to said deactivator assembly (30), said release component (33) operative to detach said at least one security tag assembly (10) from the article (101) substantially concurrent to said proximity scanning, and
a processor (44) including display facilities (46) operatively associated with said deactivator assembly (30) for display of article data read by and generated from said deactivator assembly (30),
**wherein** said deactivator assembly (30) is cooperatively structured to remain in an on-mode for a predetermined period of time and automatically reset into said off-mode upon expiration of said predetermined period of time,
**wherein** the system (100) further comprises at least one portable RFID device (50), carried and intended for use by predetermined authorized personnel, that is structured for wireless communication with said deactivator assembly (30) and operative to establish at least the on- mode of said deactivator assembly (30),
and wherein said portable RFID device (50) is further structured to be disposed in scanning relation to said deactivator assembly (30) to reestablish said on-mode in said deactivator assembly.

2. The security system as recited in claim 1 wherein said deactivator assembly further comprises
erase capabilities (36) structured to erase article data, via the proximity scan, encoded in said RFID component (24);
data storage (37) cooperative with said read component (34) and operative to store article data read from said RFID component (24) of said at least one security tag assembly (10).

3. A security system as recited in claim 2 further comprising at least one activator component structured for wireless communication with said deactivator assembly (30) and operative to establish either said on mode or said off mode of said deactivator assembly (30).

4. The security system as recited in claim 2 wherein said processor (44) and said deactivator assembly (30) are cooperatively structured to load stored article data to said processor (44) from said deactivator assembly (30).

5. The security system as recited in claim 4 wherein said processor (44) is operative to display said loaded, stored article data on said display facilities (46), and/or is structured to retain said loaded, stored article data for supplementary processing, subsequent to display thereof on said display facilities

6. The security system as recited in claim 5 wherein said supplementary processing comprises inventory control.

7. The security system as recited in any one of the claims 2-6 wherein said processor (44) and said deactivator assembly (30) are cooperatively structured to load stored article data to said processor (44) from said deactivator assembly (30).

8. The security system as recited in claim 1 further comprising
at least one portable reader structure (60) for wireless communication with said RFID component (24), said at least one portable reader (60) operative to access article data encoded in said RFID component (24), independent of said processor (44); and/or
a review application (70) configured to access article data encoded on said RFID component (24) and operative on a portable communication device (72) having short range communication technology.

9. The security system as recited in claim 8 wherein said at least one portable reader (60) includes a display (62) structured to display article data accessed by said at least one portable reader from said RFID component (24).

10. The security assembly as recited in claim 1 wherein said security tag assembly (10) comprises a tag component (12) structured for attachment to the article (101) and comprising a housing (14); said RFID component (24) comprising an RFID label secured overlying, substantially in conforming relation to an interior surface of said housing (14).

11. The security system is recited in claim 10 wherein said tag component (12) further comprises a base (20) removably connected to said housing (14), said base (20) and said housing (14) cooperatively structured for collective, removable attachment to the article when connected to one another.

## Patentansprüche

1. Ein Sicherheitssystem (100), um das unbefugte Entnehmen eines Gegenstands aus einem Bereich einzuschränken, wobei das Sicherheitssystem Folgendes umfasst:
mindestens eine Sicherheitsetikettenanordnung (10), strukturiert zur Befestigung an dem Gegenstand (101), wobei die eine Sicherheitsetikettenanordnung (10) eine RFID-Komponente (24) einschließt, strukturiert, um die Artikeldaten zu codieren, die mit dem Gegenstand (101), an welchem sie befestigt ist, verknüpft sind,
eine Deaktivatoranordnung (30), die eine Lösungskomponente (33) und eine Lesekomponente (34) einschließt, wobei die Lesekomponente strukturiert ist, um die in der RFID-Komponente (24) codierten Artikeldaten zu lesen, und Ein-/Aus-Modi (40), die aktiv sind, um eingeschränkten Betrieb der Deaktivatoranordnung (30) zu bestimmen; wobei der eingeschränkte Betrieb die Deaktivierung mindestens der Deaktivatoranordnung (30), wenn sie sich in einem Aus-Modus befindet, einschließt; wobei die Deaktivatoranordnung (30) und die mindestens eine Sicherheitsetikettenanordnung (10) zusammenwirkend strukturiert sind, um mit Hilfe der Lesekomponente (34) durch Proximitäts-Scannen der mindestens einen Sicherheitsetikettenanordnung (10) relativ zu der Deaktivatoranordnung (30) die Artikeldaten auszulesen; wobei die Lösungskomponente (33) arbeitet, um die mindestens eine Sicherheitsetikettenanordnung (10) im Wesentlichen gleichzeitig mit dem Proximitäts-Scannen vom Gegenstand (101) zu lösen; und
einen Prozessor (44), der Anzeigevorrichtungen (46) einschließt, die für die Anzeige von Artikeldaten, die von der Deaktivatoranordnung (30) ausgelesen und erzeugt werden, operativ mit der Deaktivatoranordnung (30) verbunden ist;
**wobei** die Deaktivatoranordnung (30) zusammenwirkend strukturiert ist, um über einen vordefinierten Zeitraum in einem Ein-Modus zu bleiben und sich bei Ablauf des vordefinierten Zeitraums automatisch in den Aus-Modus zurückzusetzen;
**wobei** das System (100) weiter mindestens ein tragbares RFID-Gerät (50) umfasst, das von ausgewähltem befugten Personal getragen wird und zur Verwendung durch dieses bestimmt ist, das für die drahtlose Kommunikation mit der Deaktivatoranordnung (30) strukturiert ist und arbeitet, um mindestens den Ein-Modus der Deaktivatoranordnung (30) herzustellen;
und wobei das tragbare RFID-Gerät (50) weiter strukturiert ist, um in einem Scanning-Verhältnis zu der Deaktivatoranordnung (30) angeordnet zu werden, um den Ein-Modus in der Deaktivatoranordnung wiederherzustellen.

2. Das Sicherheitssystem gemäß Anspruch 1, wobei die Deaktivatoranordnung weiter Löschfunktionen (36) umfasst, die strukturiert sind, um Artikeldaten über den Proximitäts-Scan, der in der RFID-Komponente (24) codiert ist, zu löschen;
Datenspeicher (37), der mit der Lesekomponente (34) zusammenwirkt und arbeitet, um Artikeldaten zu speichern, die aus der RFID-Komponente (24) der mindestens einen Sicherheitsetikettenanordnung (10) ausgelesen werden.

3. Ein Sicherheitssystem gemäß Anspruch 2, das weiter mindestens eine Aktivatorkomponente umfasst, die für die drahtlose Kommunikation mit der Deaktivatoranordnung (30) strukturiert ist und arbeitet, um entweder den Ein-Modus oder den Aus-Modus der Deaktivatoranordnung (30) einzustellen.

4. Das Sicherheitssystem gemäß Anspruch 2, wobei der Prozessor (44) und die Deaktivatoranordnung (30) zusammenwirkend strukturiert sind, um gespeicherte Artikeldaten von der Deaktivatoranordnung (30) in den Prozessor (44) zu laden.

5. Das Sicherheitssystem gemäß Anspruch 4, wobei der Prozessor (44) arbeitet, um die geladenen, gespeicherten Artikeldaten auf den Anzeigevorrichtungen (46) anzuzeigen, und/oder strukturiert ist, um die geladenen, gespeicherten Artikeldaten zur zusätzlichen Verarbeitung, nach deren Darstellung auf den Anzeigevorrichtungen, zu sichern.

6. Das Sicherheitssystem gemäß Anspruch 5, wobei die zusätzliche Verarbeitung Inventarkontrolle umfasst.

7. Das Sicherheitssystem gemäß einem beliebigen der Ansprüche 2-6, wobei der Prozessor (44) und die Deaktivatoranordnung (30) zusammenwirkend strukturiert sind, um gespeicherte Artikeldaten aus der Deaktivatoranordnung (30) in den Prozessor (44) zu laden.

8. Das Sicherheitssystem gemäß Anspruch 1, das weiter Folgendes umfasst:
mindestens eine tragbare Lesestruktur (60) zur drahtlosen Kommunikation mit der RFID-Komponente (24), wobei die mindestens eine tragbare Lesestruktur (60) arbeitet, um auf Artikeldaten zuzugreifen, die in der RFID-Komponente (24) codiert sind, unabhängig von dem Prozessor (44); und/oder
eine Überprüfungsanwendung (70), die konfiguriert ist, um auf Artikeldaten zuzugreifen, die in der RFID-Komponente (24) codiert sind, und auf einer tragbaren Kommunikationsvorrichtung (72) abläuft, die eine Kommunikationstechnik mit kurzer Reichweite hat.

9. Das Sicherheitssystem gemäß Anspruch 8, wobei die mindestens eine tragbare Lesestruktur (60) eine Anzeige (62) einschließt, die strukturiert ist, um Artikeldaten anzuzeigen, die die tragbare Lesestruktur aus der RFID-Komponente (24) ausliest.

10. Die Sicherheitsanordnung gemäß Anspruch 1, wobei die Sicherheitsetikettenanordnung (10) eine Etikettenkomponente (12) umfasst, welche zur Befestigung an dem Gegenstand (101) strukturiert ist und ein Gehäuse (14) umfasst; wobei die RFID-Komponente (24) ein RFID-Etikett umfasst, welches überlappend, im Wesentlichen in einem konformen Verhältnis zu einer Innenfläche des Gehäuses (14), befestigt ist.

11. Das Sicherheitssystem gemäß Anspruch 10, wobei die Etikettenkomponente (12) weiter eine Basis (20) umfasst, die abnehmbar an dem Gehäuse (14) befestigt ist, wobei die Basis (20) und das Gehäuse (14) zusammenwirkend für die kollektive, lösbare Befestigung an dem Gegenstand strukturiert sind, wenn sie miteinander verbunden sind.

## Revendications

1. Système de sécurité (100) pour restreindre le retrait non autorisé d'un article d'une zone, ledit système de sécurité comprenant :
au moins un ensemble d'étiquette de sécurité (10) conçu pour être attaché sur l'article (101), ledit au moins un ensemble d'étiquette de sécurité (10) comportant un composant de radio-identification (24) conçu pour coder les données d'article associées à l'article (101) auquel il est attaché,
un ensemble de désactivation (30) comportant un composant de dégagement (33) et un composant de lecture (34), ledit composant de lecture étant conçu pour lire les données d'article codées dans ledit composant de radio-identification (24), et des modes marche-arrêt (40) aptes à définir un fonctionnement restreint dudit ensemble de désactivation (30), ledit fonctionnement restreint comprenant la désactivation au moins dudit ensemble de désactivation (30) lorsqu'il est dans un mode d'arrêt, ledit ensemble de désactivation (30) et ledit au moins un ensemble d'étiquette de sécurité (10) étant conçus en coopération pour lire, au moyen dudit composant de lecture (34), les données d'article par balayage sans contact dudit au moins un ensemble d'étiquette de sécurité (10) relativement audit ensemble de désactivation (30), ledit composant de dégagement (33) étant apte à détacher ledit au moins un ensemble d'étiquette de sécurité (10) de l'article (101) de façon substantiellement simultanée audit balayage sans contact, et
un processeur (44) comportant un équipement d'affichage (46) associé fonctionnellement audit ensemble de désactivation (30) pour l'affichage de données d'article lues par et générées à partir dudit ensemble de désactivation (30),
dans lequel ledit ensemble de désactivation (30) est conçu en coopération pour rester dans un mode de marche pendant un intervalle de temps prédéterminé et pour se réinitialiser automatiquement dans ledit mode d'arrêt à l'expiration dudit intervalle de temps prédéterminé,
dans lequel le système (100) comprend en outre au moins un dispositif de radio-identification portatif (50), porté et destiné à être utilisé par du personnel autorisé prédéterminé, qui est prévu pour la communication sans fil avec ledit ensemble de désactivation (30) et apte à établir au moins le mode de marche dudit ensemble de désactivation (30),
et dans lequel ledit dispositif de radio-identification portatif (50) est en outre conçu pour être mis en relation de balayage par rapport audit ensemble de désactivation (30) pour rétablir ledit mode de marche dans ledit ensemble de désactivation.

2. Système de sécurité selon la revendication 1, dans lequel ledit ensemble de désactivation comprend en outre des capacités d'effacement (36) conçues pour effacer des données d'article, par le balayage sans contact, codées dans ledit composant de radio-identification (24) ;
un stockage de données (37) coopérant avec ledit composant de lecture (34) et apte à stocker des données d'article lues sur ledit composant de radio-identification (24) dudit au moins un ensemble d'étiquette de sécurité (10).

3. Système de sécurité selon la revendication 2, comprenant en outre au moins un composant d'activation conçu pour la communication sans fil avec ledit ensemble de désactivation (30) et apte à établir soit ledit mode de marche, soit ledit mode d'arrêt, dudit ensemble de désactivation (30).

4. Système de sécurité selon la revendication 2, dans lequel ledit processeur (44) et ledit ensemble de désactivation (30) sont conçus en coopération pour charger des données d'article stockées dans ledit processeur (44) depuis ledit ensemble de désactivation (30).

5. Système de sécurité selon la revendication 4, dans lequel ledit processeur (44) est apte à afficher lesdites données d'article stockées et chargées sur ledit équipement d'affichage (46), et/ou est conçu pour retenir lesdites données d'article stockées et chargées en vue d'un traitement supplémentaire, consécutif à l'affichage de celles-ci sur ledit équipement d'affichage.

6. Système de sécurité selon la revendication 5, dans lequel ledit traitement supplémentaire comprend le contrôle des stocks.

7. Système de sécurité selon l'une quelconque des revendications 2 à 6, dans lequel ledit processeur (44) et ledit ensemble de désactivation (30) sont conçus en coopération pour charger des données d'article stockées dans ledit processeur (44) depuis ledit ensemble de désactivation (30).

8. Système de sécurité selon la revendication 1, comprenant en outre :
au moins une structure de lecteur portatif (60) pour la communication sans fil avec ledit composant de radio-identification (24), ledit au moins un lecteur portatif (60) étant apte à accéder aux données d'article codées dans ledit composant de radio-identification (24), indépendamment dudit processeur (44) ; et/ou
une application d'examen (70) configurée pour accéder aux données d'article codées sur ledit composant de radio-identification (24) et fonctionnant sur un dispositif de communication portable (72) ayant une technologie de communication à courte distance.

9. Système de sécurité selon la revendication 8, dans lequel ledit au moins un lecteur portatif (60) comporte un écran (62) conçu pour afficher des données d'article auxquelles on accède dans ledit composant de radio-identification (24) au moyen dudit au moins un lecteur portatif.

10. Système de sécurité selon la revendication 1, dans lequel ledit ensemble d'étiquette de sécurité (10) comprend un composant d'étiquette (12) conçu pour être attaché à l'article (101) et comprenant un boîtier (14) ; ledit composant de radio-identification (24) comprenant un radio-identifiant fixé en superposition, substantiellement en relation de correspondance avec une surface intérieure dudit boîtier (14).

11. Système de sécurité selon la revendication 10, dans lequel ledit composant d'étiquette (12) comprend en outre une base (20) connectée de manière amovible audit boîtier (14), ladite base (20) et ledit boîtier (14) étant conçus en coopération pour être attachés de façon collective et amovible à l'article lorsqu'ils sont assemblés l'un à l'autre.
